## Europäisches Patentamt

## European Patent Office

## Office européen des brevets

(19)

(11) Veröffentlichungsnummer: **0 075 652**
**B1**

(12)

# EUROPÄISCHE PATENTSCHRIFT

(45) Veröffentlichungstag der Patentschrift:
**08.01.86**

(51) Int. Cl.⁴: **H 04 M 3/64,** H 04 M 3/08

(21) Anmeldenummer: **82104953.3**

(22) Anmeldetag: **15.07.82**

(54) Schaltungsanordnung zur Anzeige von Informationen an einer Teilnehmerstation, einem Vermittlungsplatz oder Vermittlungsapparat.

(30) Priorität: **24.09.81 DE 3137993**

(43) Veröffentlichungstag der Anmeldung:
**06.04.83 Patentblatt 83/14**

(45) Bekanntmachung des Hinweises auf die Patenterteilung:
**08.01.86 Patentblatt 86/2**

(84) Benannte Vertragsstaaten:
**AT BE FR GB IT LU**

(56) Entgegenhaltungen:
**DE - A - 2 741 768**
**DE - A - 2 751 712**
**GB - A - 2 033 697**

(73) Patentinhaber: **Telefonbau und Normalzeit GmbH,
Mainzer Landstrasse 128-146 Postfach 4432,
D-6000 Frankfurt (Main) (DE)**

(72) Erfinder: **Seidel, Wolfgang, Ing.-Grad., Am Steinberg 3,
D-6051 Dietzenbach 2 (DE)**
Erfinder: **Göbel, Thomas, Dipl.-Ing., Rheinstrasse 161,
D-6531 Münster-Sarnsheim (DE)**
Erfinder: **Kalunka, Bertold, Ing.-Grad., TH.
Fliednerstrasse 18, D-6361 Niddatal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltungsanordnung zur Anzeige von alpha-numerischen Informationen durch ein optisches Anzeigefeld an einer Teilnehmerstation, einem Vermittlungsplatz oder Vermittlungsapparat einer Fernmelde-, insbesondere Fernsprechvermittlungsanlage, welche eine gemeinsame Steuereinrichtung oder mehrere Teilsteuereinrichtungen aufweist.

Vermittlungsplätze und Vermittlungsapparate sind mit optischen Anzeigeeinrichtungen ausgerüstet, welche der Vermittlungsperson die zur Durchführung von Vermittlungsvorgängen benötigten Informationen optisch anzeigen. Hierunter fallen beispielsweise Teilnehmerrufnummern, Nummern von Amtsleitungen, Gebühren usw. Neben der Anzeige von numerischen Informationen ist jedoch auch die Anzeige von Betriebszuständen notwendig, dies kann beispielsweise durch Aufleuchten entsprechend bezeichneter Lampen geschehen.

Zur Erhöhung des Bedienungskomforts von Vermittlungsplätzen und Vermittlungsapparaten wurde neuerdings dazu übergegangen, neben der Anzeige von Ziffern auch aus Buchstaben und Zeichen gebildete Worte optisch anzuzeigen, wobei der jeweilige Betriebszustand entweder durch ein vollständiges Wort oder eine entsprechende Abkürzung gekennzeichnet wird. Ein derartiger Vermittlungsapparat wird in der Zeitschrift TN-Nachrichten 1980, Heft 82 auf Seite 15 rechte Spalte unten gezeigt. Weiterhin wird in den TN-Nachrichten 1981, Heft 83, eine Klartext-Störungsanzeige an dem Vermittlungsapparat einer Fernsprechnebenstellenanlage beschrieben (siehe Seite 28 und 29).

Auch bei Teilnehmerstationen ist eine Anzeige von Informationen vorteilhaft, beispielsweise um den Teilnehmer auf Betriebszustände hinzuweisen oder auch diesen auf weitere Schritte im Rahmen von Eingabeprozeduren hinzuweisen.

Im Falle einer numerischen Anzeige werden von der gemeinsamen Steuereinrichtung bzw. von der betreffenden Teilsteuereinrichtung die einzelnen Ziffernwerte unter Angabe des Anzeigeortes bereitgestellt. Die Anzeige mehrstelliger Ziffern erfordert neben der Angabe des Ziffernwertes auch die Angabe darüber, an welcher Stelle die einzelnen Ziffern darzustellen sind. Die Ziffernwerte und auch die Informationen über die Position innerhalb der mehrstelligen Ziffer liegen in entsprechender Form in der Steuereinrichtung oder Teilsteuereinrichtung vor, wenn es sich beispielsweise um eine Teilnehmerrufnummer, die Zahl der Gebühreneinheiten oder auch den Betrag der Gebühren selbst handelt. Bei der Anzeige von aus Buchstaben und Zeichen gebildeter Worte sind diese Voraussetzungen nicht gegeben.

Die Speicherung und Anzeige vollständiger aus Buchstaben und Zeichen gebildeter Worte wird bereits in der GB-OS 20 33 697 beschrieben. Diese Druckschrift betrifft eine Anzeigensteuerung für Vermittlungstische, bei welcher ein adressierbarer Speicher vorgesehen ist, dessen Speicherinhalt einer Decodiereinrichtung zugeführt wird, die die eigentliche Anzeigeinformation erzeugt. Die Decodiereinrichtung ist dabei einer Gruppe von Anzeigeelementen zugeordnet. Aufgrund eines bestimmten Betriebszustandes wird der betreffende Speicherbereich angesteuert, wobei die Ansteuerinformation des Speichers auch eine Ansteuerinformation für das jeweilige Anzeigeelement enthält. Die Speicheransteuerung und auch die Ansteuerung der Anzeigeelemente erfolgt dabei nach dem Multiplex-Verfahren dynamisch. Die genannte Druckschrift enthält auch einen Hinweis darauf, die Decoder als programmierbare Speicher einzusetzen, welche an bestimmten Speicherplätzen ganze Wörter beinhalten. Nachteilig bei dieser Anzeigensteuerung für Vermittlungstische ist jedoch die starre Zuordnung eines Speichers jeweils zu einer bestimmten Gruppe von Anzeigeelementen.

Die Aufgabe der vorliegenden Erfindung besteht nun darin, eine Schaltungsanordnung anzugeben, welche den genannten Nachteil vermeidet und auf einfache Weise eine Anzeige von aus Buchstaben und Zeichen gebildeter Worte auf dem Anzeigefeld einer Teilnehmerstation, eines Vermittlungsplatzes oder eines Vermittlungsapparates ermöglicht.

Diese Aufgabe wird dadurch gelöst, dass ein direkt mit dem Anzeigefeld verbundener, für jede Stelle einen Speicherplatz aufweisender Anzeigespeicher vorgesehen ist, dass das Anzeigefeld in Bereiche aufgeteilt ist, dass der jeweilige Bereich durch die Steuereinrichtung oder Teilsteuereinrichtung bestimmt wird, dass aus der Bereichsangabe mit Hilfe einer Tabelle die Anzahl der Stellen ermittelt wird, dass durch die Steuereinrichtung oder Teilsteuereinrichtung die Anfangsadresse des Speicherbereichs des anzuzeigenden Wortes mit der Angabe der Stellenzahl der Speicherbereich des Speichers bestimmt wird und dass durch die Bereichsangabe mit Hilfe der Tabelle die Speicherplätze des Anzeigespeichers zur Einspeicherung des Inhalts des Speicherbereichs des Speichers adressiert werden.

Der Anzeigespeicher enthält dabei für die Dauer der Anzeige die anzuzeigenden Informationen, er wird zu Beginn der Anzeige mit diesen geladen und erhält bei einer neuen Anzeige die neuen Informationen. Durch die Aufteilung des Anzeigefeldes in Bereiche in Verbindung mit einer Tabelle, welche für jeden Bereich die Anzahl der Stellen enthält, lässt sich auf einfache Weise leicht bestimmen, in welchen Teil des Anzeigespeichers eine anzuzeigende Information zu übertragen ist. Die Bereichsangabe dient dabei nicht nur zur Kennzeichnung des betreffenden Bereichs des Anzeigefeldes, sondern dient zusätzlich auch zur Ermittlung des Speicherbereichs, in welchem das anzuzeigende Wort enthalten ist.

Eine vorteilhafte Weiterbildung der Erfindung besteht auch darin, dass ein Bereich aus jeweils einer Anzahl von Stellen gebildet wird, wobei eine Stelle jeweils zu mehreren Bereichen gehören kann. Zur Anzeige unterschiedlich langer Worte, beispielsweise von Abkürzungen und vollständigen Worten werden unterschiedliche Bereiche des Anzeigefeldes benötigt. Die Bereiche sind derart gewählt, dass aus mehreren kleineren Bereichen jeweils ein grösserer Bereich gebildet wird. Durch diese Aufteilung wird die Kennzeichnung unterschiedlich grosser Bereiche auf einfache Weise möglich.

Die Erfindung wird an Hand eines Ausführungsbeispiels näher erläutert, welches in der Zeichnung dargestellt ist. Es zeigt

Figur 1 das Blockschaltbild einer Fernsprechnebenstellenanlage,

Figur 2 das Blockschaltbild mit den Einrichtungen zur Ansteuerung des Anzeigefeldes,

Figur 3 die Aufteilung des Anzeigefeldes in Bereiche,

Figur 4 die Behandlung der Informationen zur Anzeige,

Figur 5 die Vorgänge bei der Anzeige in einer anderen Landessprache.

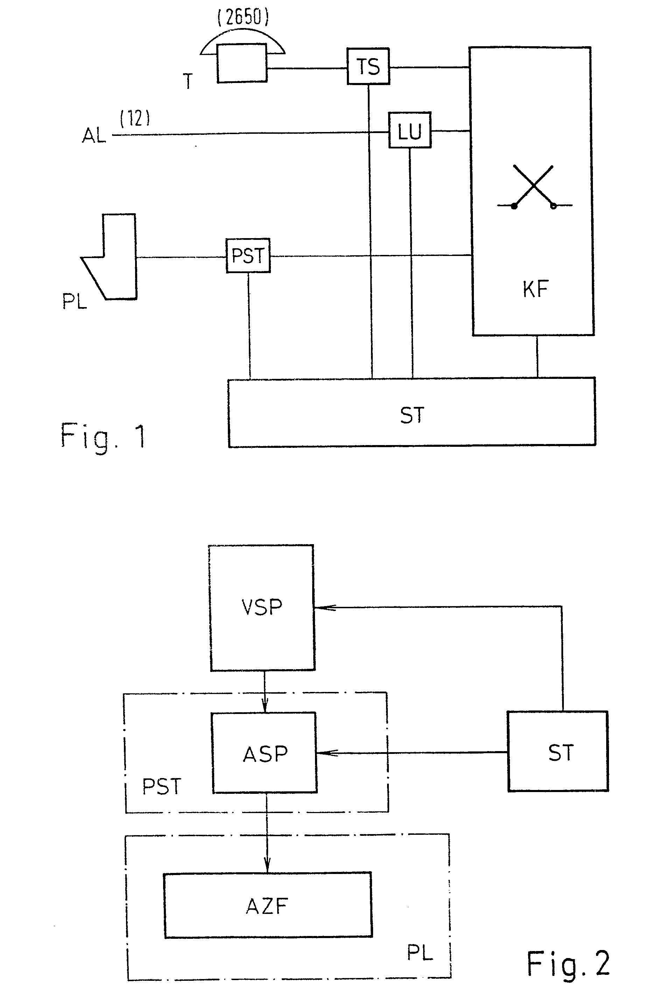

Bei dem in Figur 1 gezeigten Blockschaltbild einer Fernsprechnebenstellenanlage handelt es sich um eine solche mit analoger Durchschaltung der Sprechwege wie sie beispielsweise in der Zeitschrift TN-Nachrichten 1978, Heft 79, auf den Seiten 8 bis 14 beschrieben ist. Die Erfindung ist jedoch nicht nur auf Fernsprechvermittlungsanlagen mit analoger, sondern auch mit digitaler Durchschaltung der Sprechwege anwendbar. Im Rahmen der folgenden Beschreibung wird nur auf diejenigen Einrichtungen und Funktionen eingegangen, die zum Verständnis der Erfindung unbedingt notwendig sind.

An dem Koppelfeld KF sind Teilnehmerstationen T über Teilnehmeranschlussschaltungen TS, Verbindungsleitungen AL über Leitungsübertragungen LU und Vermittlungsapparate oder Vermittlungsplätze PL über Platzsteuerungen PST verbunden. Das Koppelfeld dient zur Durchschaltung von Verbindungen zwischen den genannten Einrichtungen, die jeweils in einer Vielzahl vorhanden sein können. Die Durchschaltung der Verbindungen innerhalb des Koppelfeldes KF erfolgt durch Steuerbefehle der Steuereinrichtungen ST, die diese auf Grund der auf den angeschlossenen Leitungen auftretenden Kriterien ermittelt.

Der Vermittlungsplatz oder Vermittlungsapparat PL weist ein Anzeigefeld AZF auf (siehe Figur 2) welches die in dem Anzeigespeicher ASP enthaltenen Informationen anzeigt. Der Anzeigespeicher ASP kann als Teil der Platzsteuerung PST ausgebildet sein. Eine derartige Platzsteuerung wird beispielsweise in der DE-AS 27 51 712 beschrieben. Der Speicher VSP enthält die anzuzeigenden, aus Buchstaben und/oder Zeichen gebildeten Worte. Dieser Speicher kann als Festwertspeicher steckbar ausgebildet sein. Die Auswahl der einzelnen Speicherbereiche, welche jeweils ein Wort enthalten, erfolgt durch die Steuerrichtung ST, diese kann mit derjenigen in Figur 1 gezeigten Steuereinrichtung ST identisch sein. Sind mehrere Teilsteuereinrichtungen vorhanden, von denen jeweils eine für bestimmte Aufgaben vorgesehen ist, so erfolgt die Ansteuerung des Speichers VSP durch diejenige Teilsteuereinrichtung, welche die zur Auswahl der anzuzeigenden Worte benötigten Informationen ermittelt. Es ist auch denkbar, dass mehrere Teilsteuereinrichtungen Zugriff zu dem Speicher VSP haben. Der Speicher VSP kann einen Teil der gemeinsamen Steuereinrichtung oder auch einen Teil einer Teilsteuereinrichtung bilden.

Das Anzeigefeld AZF besteht bei dem vorliegenden Ausführungsbeispiel aus 16 einzelnen Anzeigeelementen, wobei jedes Anzeigeelement alle möglichen Buchstaben, Ziffern und Zeichen darstellen kann. Die Erfindung ist nicht nur auf ein Anzeigefeld der gezeigten Grösse beschränkt, es kann auch grösser oder auch kleiner sein, ebenso ist auch eine andere Aufteilung und eine andere Anordnung, beispielsweise übereinander denkbar.

Die Adressierung der einzelnen Anzeigefelder erfolgt paarweise, wobei das rechte jeweils mit a und das linke mit b bezeichnet wird. Neben der Adressierung der einzelnen Anzeigeelemente mit den Ziffern 1 bis 8 ist eine Ansprache der zu Bereichen zusammengefassten Anzeigeelemente über eine Bereichskennzeichnung A bis P möglich. Dabei bildet jeweils ein Bereich einen Teil des nächst höheren Bereichs, mit Ausnahme des Bereichs E. Auf diese Funktion der Bereichskennzeichnung wird weiter unten noch näher eingegangen.

In der nun folgenden Beschreibung wird eine Tabelle erwähnt, welche für jede Bereichskennzeichnung die Anzahl der mit dieser ansprechbaren Anzeigeelemente des Anzeigefeldes AZF enthält.

Tabelle 1

| | |
|---|---|
| A-2 | H-1 |
| B-2 | I-4 |
| C-2 | K-4 |
| D-2 | L-4 |
| E-5 | M-4 |
| F-1 | N-8 |
| G-1 | P-8 |

An Hand eines Verbindungsaufbaus werden nun die einzelnen Vorgänge, welche zur Anzeige von Informationen notwendig sind, erläutert. Es wird angenommen, dass auf der Verbindungsleitung AL Nummer 12 ein ankommender Amtsanruf vorliegt und dieser zunächst mit einem Vermittlungsplatz PL verbunden werden soll. Durch die Belegung der betreffenden Leitungsübertragung LU stellt die Steuereinrichtung ST fest, dass es sich um einen ankommenden Anruf auf der Leitung Nummer 12 handelt. Zunächst wird die Leitungsnummer in den Anzeigespeicher eingetragen und zwar die 2 in die Spalte a und die 1 Spalte b der Zeile 7. Der Anzeigespeicher ASP weist ebensoviele Speicherplätze auf, wie Anzeigeelemente des Anzeigefeldes AZF vorhanden sind. Die Bezeichnung der einzelnen Speicherplätze des Anzeigespeichers ASP weist auf die entsprechenden Elemente des Anzeigefeldes AZF hin. Bei dem vorliegenden Ausführungsbeispiel wird davon ausgegangen, dass die Eintragung der anzuzeigenden Informationen jeweils im Oktal-Code erfolgt. Hierbei wird zur Darstellung der Buchstaben, Ziffern und Zeichen jeweils ein Datenwort mit einer Länge von 6 Bit verwendet. Nun erfolgt die Eintragung in den Bereich A des Anzeigefeldes AZF. Die Kennzeichnung des Betriebszustandes ist beispielsweise in dem Bereich x des Speichers VSP abgelegt. Aus der Tabelle 1 ist der Steuereinrichtung bekannt, dass der Bereich A aus zwei Anzeigeelementen besteht. Daraufhin wird nur der mit x bezeichnete Speicherbereich des Speichers VSP ausgelesen und der Speicherinhalt in den mit der Bereichskennzeichnung A bezeichneten Speicherbereich ASP, also in den Speicherbereich 8 eingetragen. Die dort enthaltene Information besteht aus den Buchstaben AK = Amtsanruf Kommend.

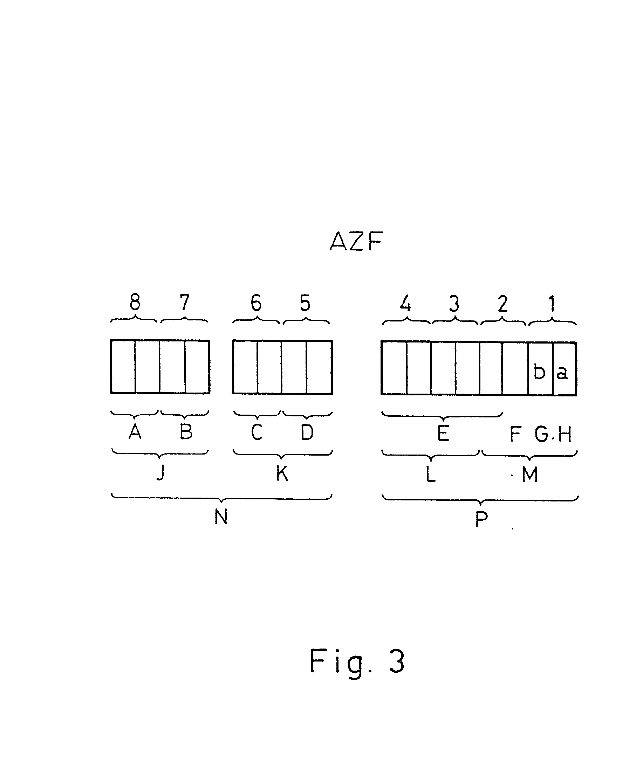

Anschliessend wird die im Anzeigespeicher ASP enthaltene Information zur Anzeige im Anzeigefeld AZF freigegeben. Die Vermittlungsperson, die durch ein akustisches Zeichen auf den vorliegenden Anruf hingewiesen wurde, betätigt die Abfragetaste und wird mit dem anrufenden Teilnehmer verbunden. Es wird angenommen, dass dieser eine Verbindung zum Teilnehmer T mit der Rufnummer 26 50 wünscht (siehe Figur 1). Nachdem die Vermittlungsperson die betreffende Rufnummer eingegeben hat, veranlasst die Steuereinrichtung die Anzeige derselben im Bereich K des Anzeigefeldes AZF (siehe Figur 3). Zu diesem Zweck wird die Rufnummer in die Speicherplätze 5 und 6 des Anzeigespeichers ASP eingetragen.

Ist der gewünschte Teilnehmer frei, so wird dieser Betriebszustand ebenfalls auf dem Anzeigefeld AZF angezeigt. Für die Anzeige ist der Bereich L des Anzeigefeldes AZF vorgesehen. Das Wort «FREI» ist in dem Speicher VSP unter der Anfangsadresse enthalten. Aus der Tabelle ergibt sich, dass der Bereich L aus 4 Anzeigeelementen besteht, d.h. die Information in dem Speicher VSP in einem aus 2 Zeilen gebildeten Speicherbereich enthalten ist. Die betreffenden Speicherplätze werden angesteuert, der Inhalt ausgelesen und in Speicherplätze 3 und 4 des Anzeigespeichers ASP übertragen. Danach erfolgt die Freigabe zur Anzeige.

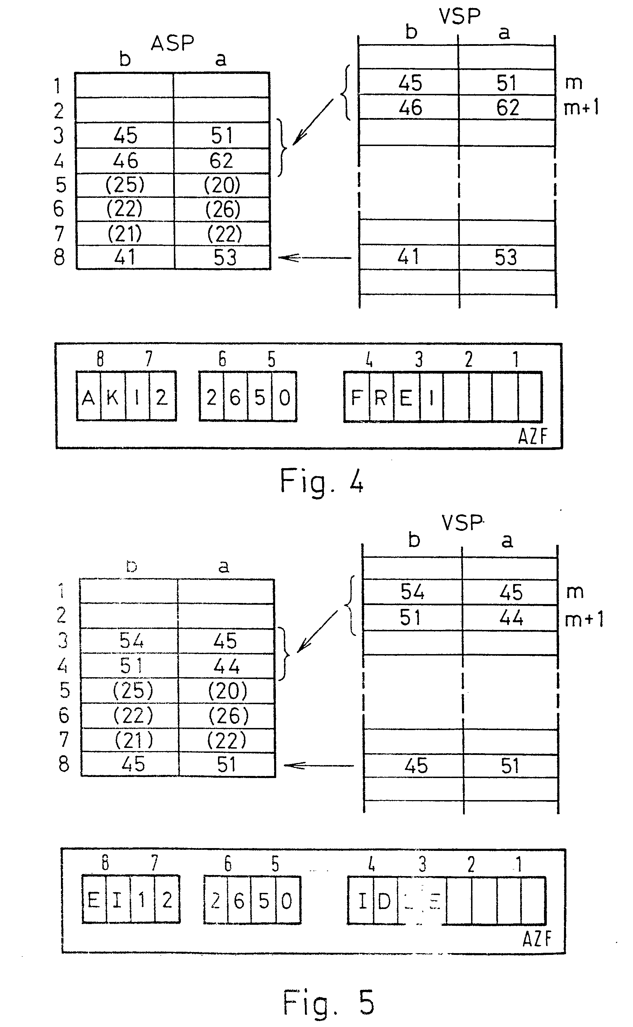

Durch Auswechseln des Speichers VSP lässt sich die Anzeige leicht auf eine andere Landessprache umstellen, wenn der neu eingesetzte Speicher die entsprechenden Worte enthält, und diese entsprechend ihrer Bedeutung in den gleichen Speicherbereichen enthalten sind. Bei dem in Figur 5 gezeigten Beispiel wird davon ausgegangen, dass die Anzeige in englischer Sprache erfolgen soll. Die Vorgänge bei der Ansteuerung des Speichers VSP und des Anzeigespeichers ASP sind die gleichen wie bei dem an Hand von Figur 4 erläuterten Beispiel. Der ankommende Amtsanruf wird mit EI = External Call Intern gekennzeichnet. Anstelle des Wortes «FREI» tritt das Wort «IDLE».

Bei einer Aufteilung des Anzeigefeldes AZF gemäss Figur 3 sind die Bereiche I und K vorzugsweise für die Anzeige von Amtsleitungsnummern und Teilnehmerrufnummern von Nebenstellenteilnehmern vorgesehen, während das Feld P zur Anzeige von externen Teilnehmerrufnummern, Gebühren und insbesondere von Worten zur Kennzeichnung von Betriebszuständen gedacht ist. Der Bereich E wird aus 5 Anzeigeelementen gebildet, da es sich gezeigt hat, dass eine derartige Anzahl von Stellen für die Anzeige von Abkürzungen besonders günstig ist.

Mit Hilfe einer erweiterten Tabelle 2, wie sie im folgenden gezeigt wird, kann diese auch zur Kennzeichnung der einzelnen Anzeigeelemente mit Hilfe der Bereichskennzeichnung verwendet werden.

Tabelle 2

| | |
|---|---|
| A-2/8b bis 8a | H-1/1a |
| B-2/7b bis 7b | I-4/8b bis 7a |
| C-2/6b bis 6b | K-4/6b bis 5a |
| D-2/5b bis 5b | L-4/4b bis 3a |
| E-5/4b bis 2b | M-4/2b bis 1a |
| F-1/2a | N-8/8b bis 5a |
| G-1/1b | P-8/4b bis 1a |

Hierbei wird, wie in bereits beschriebener Weise der Wert vor dem Schrägstrich für die Adressierung des betreffenden Speicherbereichs im Speicher VSP benutzt und die Information nach dem Schrägstrich zur Adressierung der betreffenden Speicherplätze im Anzeigespeicher ASP.

Die Erfindung ist nicht nur auf Vermittlungsplätze und Vermittlungsapparate beschränkt, vielmehr kann diese auch bei Teilnehmerstationen zur Anwendung kommen. Die Steuereinrichtung ist in diesem Fall ein Bestandteil der Teilnehmerstation.

Neben der Verwendung von fremdsprachenindividuellen Speichern VSP ist auch ein einheitlicher Speicher denkbar, welcher für jede Fremdsprache einen bestimmten Speicherbereich aufweist. Dabei besitzen alle Speicherbereiche die gleiche Grösse, wobei die Adressierung der einzelnen Speicherplätze in der gleichen Weise erfolgt wie bei einem sprachindividuellen Einzelspeicher. Die Auswahl des jeweiligen Speicherbereichs d.h. der Landessprache erfolgt durch das Hinzuaddieren eines bestimmten Wertes zur Grundadresse, welche den Anfang des ersten Speicherbereichs kennzeichnet, welcher die Werte in der ursprünglichen Landessprache enthält. Die betreffende Landessprache wird durch den hinzu zu addierenden Wert einmalig bestimmt, welcher im Rahmen der Steuerläufe selbsttätig benutzt wird.

**Patentansprüche**

1. Schaltungsanordnung zur Anzeige von alpha-numerischen Informationen durch ein optisches Anzeigefeld (AZF) an einer Teilnehmerstation (T), einem Vermittlungsplatz (PL) oder Vermittlungsapparat einer Fernmelde-, insbesondere Fernsprechvermittlungsanlage, welche eine gemeinsame Steuereinrichtung (ST) oder mehrere Teilsteuereinrichtungen aufweist, wobei das Anzeigefeld (AZF) eine Vielzahl von Stellen (1a bis 8b) zur Anzeige jeweils eines Buchstabens, einer Zahl oder eines Zeichens aufweist, und die anzuzeigenden einen Betriebszustand kennzeichnenden Informationen als vollständige Worte oder Abkürzungen in jeweils einem Speicherbereich eines Speichers (VSP) abgelegt sind, dadurch gekennzeichnet, dass ein direkt mit dem Anzeigefeld (AZF) verbundener, für jede Stelle (1a bis 8b) einen Speicherplatz aufweisender Anzeigespeicher (SP) vorgesehen ist, dass das Anzeigefeld (AZF) in Bereiche (A bis P) aufgeteilt ist, dass der jeweilige Bereich durch die Steuereinrichtung (ST) oder Teilsteuereinrichtung bestimmt wird, dass aus der Bereichsangabe mit Hilfe einer Tabelle die Anzahl der Stellen ermittelt wird, dass durch die Steuereinrichtung (ST) oder Teilsteuereinrichtung die Anfangsadresse des Speicherbereichs des anzuzeigenden Wortes und mit der Angabe der Stellenzahl der Speicherbereich des Speichers (VSP) bestimmt wird, und dass durch die Bereichsangabe mit Hilfe der Tabelle die Speicherplätze des Anzeigespeichers (ASP) zur Einspeicherung des Inhalts des Speicherbereichs des Speichers (VSP) adressiert werden.

2. Schaltungsanordnung nach Anspruch 1, dadurch gekennzeichnet, dass ein Bereich aus jeweils einer Anzahl von Stellen gebildet wird, wobei eine Stelle zu mehreren Bereichen gehören kann.

3. Schaltungsanordnung nach einem der Ansprüche 1 oder 2, dadurch gekennzeichnet, dass der Speicher (VSP) eine Vielzahl von gleichen Speicherbereichen aufweist, wobei jeder Landessprache ein individueller Speicherbereich zugeordnet ist, und dass der zu benutzende Speicherbereich durch einen seine Anfangsadresse kennzeichnenden Wert ermittelt wird, welche einmalig festgelegt und bei jedem Adressiervorgang benutzt wird.

**Revendications**

1. Montage pour l'affichage d'informations alphanumériques par un écran de visualisation (AZF) à un poste d'abonné (T), une position d'opératrice (PL) ou un appareil de commutation d'une installation de télécommunication, en particulier d'une installation de commutation téléphonique, qui possède un dispositif de commande commun (ST) ou plusieurs dispositifs de commande partiels, où l'écran de visualisation (AZF) présente une multiplicité de positions (1a à 8b) pour l'affichage de chaque fois une lettre, un chiffre ou un signe et où les inforamtions à afficher, qui indiquent un état d'exploitation, sont chargées, sous forme de mots complets ou d'abréviations, chacune dans une zone de mémoire (VSP) caractérisé en ce qu'il comprend une mémoire d'affichage (ASP) reliée directement à l'écran de visualisation (AZF) et présentant un emplacement pour chaque position (1a à 8b) de l'écran, que l'écran de visualisation (AZF) est partagé en zones (A à P), que la zone à utiliser chaque fois est déterminée par le dispositif de commande (ST) ou un dispositif de commande partiel, que le nombre de positions est déterminé chaque fois à l'aide d'une table à partir de l'indication de zone, que le dispositif de commande (ST) ou un dispositif de commande partiel détermine l'adresse de début de la zone de mémoire du mot à afficher et que la zone de la mémoire (VSP) est déterminée par l'indication du nombre de positions, et que l'indication de zone produit, à l'aide de la table, l'adressage des emplacements de la mémoire d'affichage (ASP) pour qu'il y soit chargé le contenu de la zone considérée de la mémoire (VSP).

2. Montage selon la revendication 1, caractérisé en ce qu'une zone est formée chaque fois d'un certain nombre de positions, une position pouvant appartenir à plusieurs zones.

3. Montage selon la revendication 1 ou 2, caractérisé en ce que le mémoire (VSP) présente une multiplicité de zones identiques et plusieurs langues nationales sont conjuguées chacune à une zone individuelle et que la zone de mémoire à utiliser est déterminée par une valeur qui caractérisé l'adresse de début de la zone concernée, qui est fixée une fois et est utilisée à chaque opération d'adressage.

**Claims**

1. Information display circuitry for the display of alpha-numeric information by an optical display panel at a telephone set, an operator's desk or an operator's apparatus of a telecommunication-, especially a telephone-switching system having a common control unit (ST) or several sub-control units, whereby the display panel (AZT) presents a plurality of digits (1a to 8b), each for the display of a letter, a number or a character and the displayed information indicating an operational condition in form of complete words or abbreviations is stored in a storage field of a memory (VSP), characterized in, a display memory (ASP) having a storage field for each digit (1a to 8b) directly connected with the display panel (AZF), which is divided up into areas (A to P), each area is designated by the control unit (ST) or sub control unit, which uses the area information for the determination of the number of digits from a table, defines the initial address of the storage field containing the word to be displayed and uses the digit information for the definition of the storage field of the memory (VSP) whereby the storage positions of the display memory (ASP) are addressed by the area information with help of the table for storing the content of the storage field of the memory (VSP).

2. Information display circuitry according to claim 1, characterized in areas consisting each of a number of digits, whereby a digit may belong to several areas.

3. Information display circuitry according to claim 1 or 2, characterized in the memory (VSP) having a plurality of equal storage areas, whereby an individual area is assigned to each language and the used storage area is determined by a value representing the initial address, which is set once and used at each addressing operation.

(2650)

T

AL (12)

PL

TS

LU

PST

KF

ST

Fig. 1

VSP

ASP

PST

ST

AZF

PL

Fig. 2

7

AZF

Fig. 3

ASP

| | b | a |
|---|---|---|
| 1 | | |
| 2 | | |
| 3 | 45 | 51 |
| 4 | 46 | 62 |
| 5 | (25) | (20) |
| 6 | (22) | (26) |
| 7 | (21) | (22) |
| 8 | 41 | 53 |

VSP

| | b | a | |
|---|---|---|---|
| | 45 | 51 | m |
| | 46 | 62 | m+1 |
| | | | |
| | | | |
| | | | |
| | 41 | 53 | |
| | | | |

| 8 | 7 | | 6 | 5 | | 4 | 3 | 2 | 1 |
|---|---|---|---|---|---|---|---|---|---|
| A | K | I | 2 | | 2 | 6 | 5 | 0 | |
| F | R | E | I | | | | | | |

AZF

## Fig. 4

VSP

| | b | a |
|---|---|---|
| 1 | | |
| 2 | | |
| 3 | 54 | 45 |
| 4 | 51 | 44 |
| 5 | (25) | (20) |
| 6 | (22) | (26) |
| 7 | (21) | (22) |
| 8 | 45 | 51 |

VSP

| | b | a | |
|---|---|---|---|
| | 54 | 45 | m |
| | 51 | 44 | m+1 |
| | | | |
| | | | |
| | | | |
| | 45 | 51 | |
| | | | |

| 8 | 7 | | 6 | 5 | | 4 | 3 | 2 | 1 |
|---|---|---|---|---|---|---|---|---|---|
| E | I | 1 | 2 | | 2 | 6 | 5 | 0 | |
| I | D | L | E | | | | | | |

AZF

## Fig. 5